# EUROPEAN PATENT APPLICATION

(11) **EP 1 320 209 A2**
(43) Date of publication of application: **18.06.2003**
(21) Application number: 02258509.5
(22) Date of filing: 10.12.2002
(51) Int. Cl.: H04J 3/16, H04J 3/24

(54) **Digital data multiplexing apparatus**

(30) Priority: 17.12.2001 JP 2001383332
(71) Applicant: NEC Electronics Corporation, Kawasaki, Kanagawa 211-8668 (JP)
(72) Inventor: Hara, Tatsuya, c/o NEC Micro Systems, Ltd., Kawasaki-shi, Kanagawa (JP)
(74) Representative: Gill, David Alan

(57) **Abstract**

The invention provides for digital data multiplexing apparatus including input buffers B1 to Bn of a plurality of channels; occupied amount calculation devices O1 to On for calculating occupied amounts of the input buffers; an occupied amount of buffer comparison device 9 for comparing a threshold value set for respective buffers B1 to Bn in advance and actual occupied amount calculated by the calculation devices O1 to On; and a data selection device 6 for selecting a buffer with a largest occupied amount out of buffers of which occupied amounts have exceeded a threshold value based on results of comparison of occupied amounts 10-1 to 10-m of the comparison device 9 and outputting the data.

## Description

The present invention relates to a digital data multiplexing apparatus and, in particular, to a digital data multiplexing apparatus that inputs a plurality of kinds of digital data, for example, various kinds of packet data including videos, voices and text data, multiplexes the data in a mixed state and outputs the multiplexed data.

In recent years, it is a well-known fact that information electronic devices such as a cellular phone are widely used in the world. In addition, it is also known that many of these information electronic devices operate based on digital data including video, voice and text data.

In general, such digital data is input to digital data multiplexing apparatus as various kinds of packet data, and multiplexed in a mixed state of the data to be sent and received.

In addition, the digital data multiplexing apparatus for multiplexing digital data uses a plurality of temporary memory means (buffer memory) for temporarily storing a plurality of kinds of digital data in order to match input timing of the digital data.

This conventional digital data multiplexing apparatus is disclosed, for example, in Japanese Patent Laid-Open No. 9-205407.

When an actual occupied amount of data, that is, an input amount of data, in a plurality of buffer memories has exceeded a threshold value set in advance, a multiplexing technique described in such a patent application selects digital data temporality stored in a pertinent buffer memory as temporary memory means, thereby making it possible to select data surely and control a size (memory capacity) of a buffer memory to be necessary minimum.

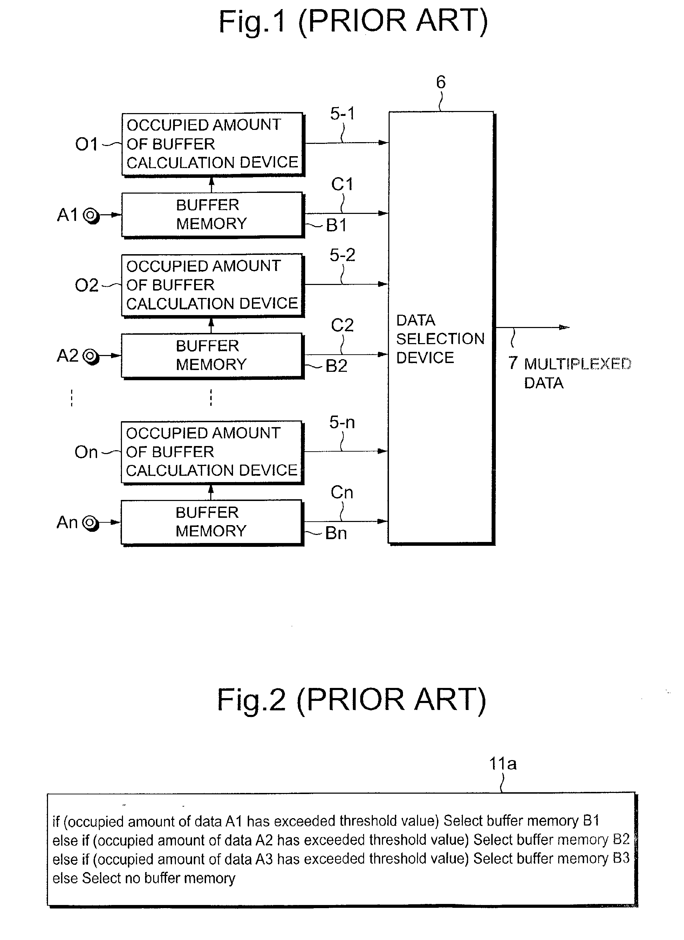

Fig. 1 is a block diagram of a digital data multiplexing apparatus for explaining a conventional example. Fig.2 shows a program for explaining a buffer selecting operation of a data selection device shown in Fig. 1. As shown in Figs. 1 and 2, the conventional digital data multiplexing apparatus is provided with: a plurality of buffer memories B1 to Bn for inputting digital data A1 to An from input terminals, respectively, and storing the digital data temporarily; occupied amount of buffer calculation devices O1 to On for calculating occupied state of data capacity in a plurality of buffer memories B1 to Bn; and a data selection device 6 for selecting output digital data C1 to Cn of the buffer memories B1 to Bn based on multiplex control signals 5-1 to 5-n, which are outputted from the occupied amount of buffer calculation devices O1 to On, respectively, and represent an input state of the buffer memories, and outputting the digital data as multiplexed data 7.

In the data selection device 6 in such a digital data multiplexing apparatus, digital data is selected as described in a selection program 11a shown in Fig. 2.

In this digital data multiplexing apparatus, digital data A1 to An are written in the buffer memories B1 to Bn, respectively. In addition, the occupied amount of buffer calculation devices O1 to On calculate an occupied amount of data in the buffer memories B1 to Bn, respectively. A threshold value is set in the occupied amount of buffer calculation devices O1 to On, respectively. If a calculated occupied amount of buffer has exceeded the threshold value, the occupied amount of buffer calculation devices O1 to On send the multiplex control signals 5-1 to 5-n indicating the state to the data selection device 6. The data selection device 6 sequentially reads out data from the buffer memories B1 to Bn in which the occupied amount of buffer has exceeded the threshold value and outputs the multiplexed data 7 of a fixed rate.

However, such a multiplexing technique has problems as described below. That is, since the selection of the buffer memories B1 to Bn for multiplexing to output data is determined based only on the multiplex control signals 5-1 to 5-n compared with a threshold value, the more input channels (i.e., A1 to An), the larger necessary capacities of the buffer memories B1 to Bn becomes.

This is because, if occupied amounts of all the buffer memories B1 to Bn have exceeded the threshold value simultaneously, the buffer memories B1 to Bn are selected in accordance with a priority. However, unselected ones of the buffer memories B1 to Bn are kept waited until outputs from selected ones of the buffer memories B1 to Bn end.

Thus, if there is input data for, for example, two channels, a buffer memory for a second channel requires an extra buffer memory for being kept waited until an output from a buffer memory for a first channel ends. In addition, if there is input data for three channels, a buffer memory to be selected third requires an extra buffer memory for being kept waited until an output from a buffer memory selected first ends and an output from a buffer memory selected second ends. Therefore, as the number of input channels increases, a capacity necessary for a buffer memory selected last also increases.

The above-described conventional digital data multiplexing apparatus has a drawback in that, as the number of channels of digital data to be input increases, a capacity of a buffer memory necessary for a channel with a low priority also increases.

The invention seeks to provide for digital data multiplexing apparatus having advantages over known such apparatus.

According to one aspect of the invention, there is provided a plurality of temporary memory means for temporarily storing digital data individually; a plurality of occupied amount of data calculation means for calculating occupied amounts of digital data of the plurality of temporary memory means, respectively; occupied amount comparison means for comparing a result of calculation of the plurality of occupied amount of data calculation means and a threshold value of an occupied amount set for respective temporary memory means in advance; and data selection means for selecting an output from the plurality of temporary memory means to multiplex the output by a unit of packet according to a result of comparison of the occupied amount comparison means.

The present invention advantageously provides a digital data multiplexing apparatus that can reduce a size, i.e. capacity, of an input buffer memory in multiplexing digital data by a unit of packet and outputting the data.

Moreover, the digital data multiplexing apparatus of the present invention can adopt various forms of application as described below.

That is, when an occupied amount of data of one temporary memory means among the plurality of temporary memory means has exceeded a threshold value set in advance, the data selection means of the digital data multiplexing apparatus of the present invention can select digital data stored in the pertinent temporary memory means. When an occupied amount of data of the plurality of temporary memory means has exceeded the threshold value set in advance, the data selection means can select digital data stored in a temporary memory means having a largest occupied amount among the plurality of temporary memory means.

In addition, the plurality of temporary memory means of the digital data multiplexing apparatus of the present invention can use a buffer memory, respectively. The plurality of occupied amount of data calculation means use an occupied amount of buffer calculation device, respectively.

According to another aspect of the present invention, there is provided a plurality of temporary memory means for temporarily storing digital data individually; a plurality of occupied amount of data calculation means for calculating occupied amounts of digital data of the plurality of temporary memory means, respectively; a priority control device that is connected to at least one out of the plurality of occupied amount of data calculation means and changes a priority of a pertinent temporary memory means among the plurality of temporary memory means; occupied amount comparison means for comparing an output from the priority control device and outputs from at least one of occupied amount of data calculation means not connected to the priority control device and a threshold value of an occupied amount to be set for respective temporary memory means in advance; and data selection means for selecting outputs from the plurality of temporary memory means according to a result of comparison of the occupied amount comparison means and multiplexing the outputs by a unit of packet.

According to yet another aspect of the present invention, there is provided a plurality of temporary memory means for temporarily storing digital data individually; a plurality of occupied amount of data calculation means for calculating occupied amounts of digital data of the plurality of temporary memory means, respectively; a priority control device which is connected to at least one of the plurality of occupied amount of data calculation means and changes a priority of a pertinent temporary memory means among the plurality of temporary memory means; a priority selection switch which is connected to at least one of the plurality of occupied amount of data calculation means and the priority control device and switches an occupied amount of digital data of the temporary memory means outputted from the connected occupied amount of data calculation means and an occupied amount of digital data outputted from the connected priority control device; occupied amount comparison means for comparing an output from the priority control device and outputs from at least one of occupied amount of data calculation means not connected to the priority control device and a threshold value of an occupied amount to be set for respective temporary memory means in advance; and data selection means for selecting outputs from the plurality of temporary memory means according to a result of comparison of the occupied amount comparison means and multiplexing the outputs by a unit of packet.

According to a further aspect of the present invention, there is provided a plurality of timing control devices for controlling timing for inputting and outputting digital data individually; one temporary memory means for inputting outputs from the plurality of timing control devices to temporarily store the outputs; occupied amount of data calculation means for calculating an occupied amount of digital data of the one temporary memory means for respective timing and generating a multiplex control signal corresponding to a plurality of kinds of digital data; occupied amount comparison means which is connected to the occupied amount of data calculation means and compares the multiplex control signal and a threshold value of an occupied amount of data to be set for respective timing control devices in advance; and data selection means for selecting an output from the one temporary memory means according to the multiplex control signal outputted from the occupied amount of data calculation means and a result of comparison of the occupied amount of comparison means and multiplexing the output by a unit of packet.

This invention is described further hereinafter by way of example only with reference to and as illustrated in the accompanying drawings in which:
Fig. 1 is a block diagram of a digital data multiplexing apparatus for explaining a conventional example;
Fig. 2 shows a program for explaining a buffer selecting operation of a data selection device shown in Fig. 1;
Fig. 3 is a block diagram of a digital data multiplexing apparatus for explaining a first embodiment of the present invention;
Fig. 4 is a flow diagram of operations for increasing and decreasing an occupied amount of a buffer in an occupied amount of buffer calculation device shown in Fig. 3;
Fig. 5 is a flow diagram of operations for judging an occupied amount of a buffer in the occupied amount of buffer calculation device shown in Fig. 3;
Fig. 6 is a flow diagram of operations for comparing an occupied amount of buffer in an occupied amount of buffer comparison device shown in Fig. 3;
Fig. 7 shows a program for explaining operations for selecting a buffer of a buffer selection unit provided inside a data selection device shown in Fig. 3;
Fig. 8 is a block diagram of a digital data multiplexing apparatus for explaining a second embodiment of the present invention;
Fig. 9 is a flow diagram of operations for controlling a priority of a buffer in a priority control device shown in Fig. 8;
Fig. 10 is a block diagram of a digital data multiplexing apparatus for explaining a third embodiment of the present invention;
Fig. 11 is a block diagram of a digital data multiplexing apparatus for explaining a fourth embodiment of the present invention; and
Fig. 12 is a block diagram of a digital data multiplexing apparatus for explaining a fifth embodiment of the present invention.

As will be appreciated an embodiment of the present invention relates to a digital data multiplexing apparatus for outputting data by a unit of packet, wherein the digital data multiplexing apparatus calculates an occupied amount of input buffers of a plurality of channels, compares the occupied amount with a threshold value set in advance and selects a buffer of which an occupied amount is the largest out of buffers of which the occupied amount has exceeded the threshold value and outputs the data, thereby reducing a size of the buffer.

Multiplexing operations of digital data will be described in accordance with set conditions while comparing the digital multiplexing apparatus of the present invention to output the data by a unit of packet and a conventional digital data multiplexing apparatus.

First, the conventional digital data multiplexing apparatus will be described. In the conventional digital data multiplexing apparatus, it is assumed that the number of channels is three, an output rate is 300 bytes/S, a packet size is 100 bytes, and a threshold value is 100 bytes for each channel.

In order to consider a worst case of an A1 channel, it is assumed that an input rate of the A1 channel is 99 bytes/S, an input rate of an A2 channel is 0.9 byte/S, and an input rate of an A3 channel is 0.1 byte/S.

As a state of each buffer based on these conditions, a state in which an A2 channel and an A3 channel have exceeded the threshold value immediately before an A1 channel exceeds the threshold value is assumed to be a state S20. Operations of the digital data multiplexing apparatus will be described from this state. This state (S20) occurs when input starting timing of each channel is staggered. In such a state, since the A2 channel and the A3 channel have exceeded the threshold value, the A2 channel is selected first in accordance with a priority set in advance. Thereafter, data for one packet is outputted via a data selection device. A state after the output is assumed to be a state S21. As a state of each buffer at this point, the A1 channel has an occupied amount for 1.98 packets, the A2 channel has an occupied amount for 0.009 packet, and the A3 channel has an occupied amount for 1.001 packets.

Subsequently, in the state S21, since the A1 channel and the A3 channel have exceeded the threshold value, the A1 channel is selected in accordance with the priority. Here, the A1 channel has the highest priority and is selected most preferentially whenever it exceeds the threshold value. That is, the A1 channel is in the worst case in the state S21 and requires a buffer memory capacity for approximately two packets.

Next, in order to consider a worst case of the A2 channel, it is assumed that an input rate of the A2 channel is 99 bytes/S, an input rate of the A1 channel is 0.9 byte/S, and an input rate of the A3 channel is 0.1 byte/S.

As a state of each buffer based on these conditions, a state in which the A3 channel has exceeded the threshold value immediately before the A1 channel and the A2 channel exceed the threshold value is assumed to be a state S31. Operations of the digital data multiplexing apparatus will be described from this state. This state (S31) also occurs when input starting timing of each channel is staggered as in the above-described operations. In such a state, since the A3 channel has exceeded the threshold value, the A3 channel is selected.

Thereafter, data for one packet is outputted via the data selection device. A state after the output is assumed to be a state S32. As a state of each buffer at this point, the A1 channel has an occupied amount for 1.009 packets, the A2 channel has an occupied amount for 1.998 packets, and the A3 channel has an occupied amount for 0.001 packet.

Subsequently, in the state S32, since the A1 channel and the A2 channel have exceeded the threshold value, the A1 channel is selected in accordance with the priority. A state after the A1 channel is outputted is assumed to be a state S33. As a state of each buffer at this point, the A1 channel has an occupied amount for 0.018 packet, the A2 channel has an occupied amount for 2.988 packets, and the A3 channel has an occupied amount for 0.002 packet. The state at this point is the worst case of the A2 channel, and the A2 channel requires a buffer memory capacity for approximately three packets.

As described above, in the worst case of each channel, the digital data multiplexing apparatus starts operation in a state in which a channel with a lower priority than the channel has exceeded the threshold value and a channel that is in a state immediately before the channel and a channel with a higher priority than the channel exceed the threshold value. The digital data multiplexing apparatus requires an extra buffer memory for weights for transfer for one channel that has exceeded the threshold value and transfer for the channel with a higher threshold value than the channel. In short, in the case of the A3 channel, a buffer memory for approximately one packet that is required immediately before the channel exceeds the threshold value and approximately two packets that are required for weights for two channels with a higher priority than the channel, the total three packets, is required (there is no channel with a lower priority than the channel) . In this way, each time the number of channels increases, a capacity of a buffer memory necessary for a channel with a lower priority than the channel increases.

Next, embodiments of the present invention will be described with reference to the accompanying drawings.

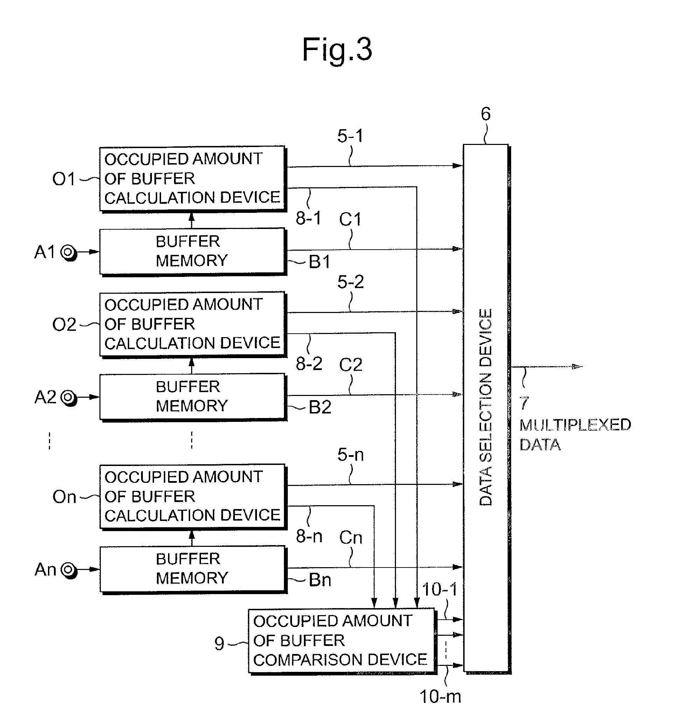

Fig. 3 is a block diagram of a digital data multiplexing apparatus for explaining a first embodiment of the present invention. As shown in Fig. 3, in this embodiment, in multiplexing a plurality of kinds of digital data (channels) A1 to An, the digital data multiplexing apparatus is provided with: a plurality of buffer memories B1 to Bn as temporary memory means for temporarily storing the digital data A1 to An individually; a plurality of occupied amount of buffer calculation devices O1 to On (occupied amount of data calculation means) for calculating occupied amount of digital data of these buffer memories B1 to Bn, respectively; an occupied amount of buffer comparison device 9 for comparing occupied amount of buffer signals 8-1 to 8-n that are results of calculation of these plurality of occupied amount of buffer calculation devices O1 to On and a threshold value of an occupied amount to be set for respective buffer memories B1 to Bn in advance; and a data selection device 6 for selecting output digital data C1 to Cn of the buffer memories B1 to Bn according to results of comparison of occupied amounts 10-1 to 10-m of this occupied amount of buffer comparison device 9 and multiplex control signals 5-1 to 5-n generated in the occupied amount of buffer calculation devices O1 to On and outputting multiplexed data 7 by a unit of packet.

Here, the occupied amount of buffer calculation devices O1 to On calculate occupied amounts of data of the buffer memories B1 to Bn and output the occupied amount of buffer signals 8-1 to 8-n to the occupied amount of buffer comparison device 9 and, at the same time, output the multiplex control signals 5-1 to 5-n to the data selection device 6. That is, the occupied amount of buffer calculation devices O1 to On compare the occupied amounts of data with a threshold value set in advance and notify the data selection device 6 to the effect that the occupied amounts of data have exceeded the threshold value. In addition, the occupied amount of buffer comparison device 9 compares occupied amounts of buffer to find which occupied amount of buffer is the largest and outputs a result of the comparison to the data selection device 6. This data selection device 6 selects a buffer memory with the largest occupied amount of buffer out of the buffer memories B1 to Bn of which the occupied amount of buffer has exceeded the threshold value and outputs it as multiplexed data 7.

In short, when an occupied amount of data of one buffer memory among the buffer memories B1 to Bn has exceeded the threshold value set in advance, the data selection device 6 selects digital data stored in the pertinent buffer memory. When occupied amounts of data of a plurality of buffer memories have exceeded the threshold value set in advance, the data selection device 6 selects digital data stored in a buffer memory having a largest occupied amount among them. Therefore, the buffer memories B1 to Bn can reduce a necessary total data capacity.

In this way, the digital data multiplexing apparatus of the present invention shown in Fig. 3 has the buffer memories B1 to Bn and the occupied amount of buffer calculation devices O1 to On for respective input channel data A1 to An. In addition, the occupied amount of buffer comparison device 9 commonly provided for the buffer memories and the occupied amount of buffer calculation devices monitors the input digital data A1 to An and the output digital data C1 to Cn, calculates an occupied amount of buffer, and outputs the occupied amounts of buffer 8-1 to 8-n.

Moreover, the occupied amount of buffer comparison device 9 compares the occupied amount of buffer and the threshold value set in advance and outputs the multiplex control signals 5-1 to 5-n. The occupied amount of buffer comparison device 9 compares the occupied amounts of buffer 8-1 to 8-n to identify an occupied amount of which buffer memory is the largest and, then, outputs a result of the comparison to the data selection device 6. The data selection device 6 inputs the multiplex control signals 5-1 to 5-n, selects a buffer memory having a largest occupied amount out of the buffer memories of which the occupied amount has exceeded the threshold value, and outputs the multiplexed output 7.

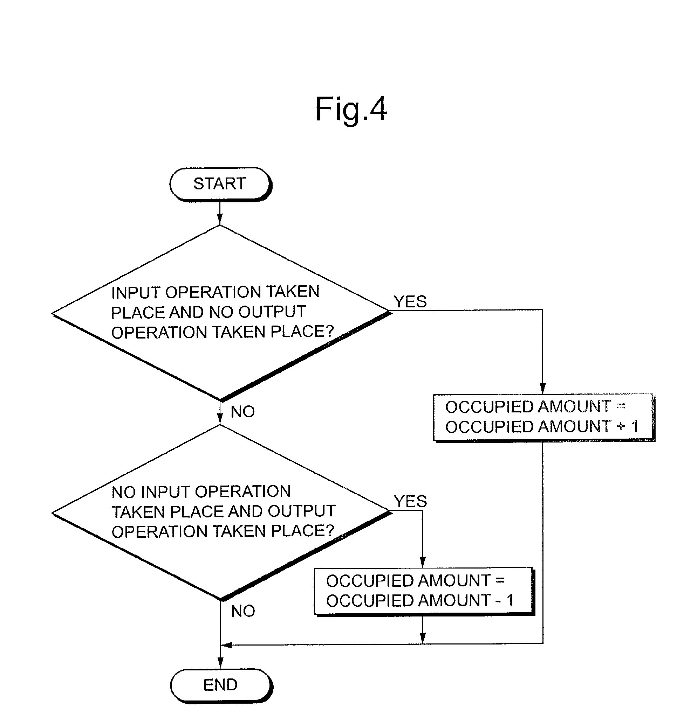

Next, respective structures and operations of the above-described occupied amount of buffer calculation devices O1 to On, occupied amount of buffer comparison device 9 and data selection device 6 will be described with reference to Figs. 4 to 7.

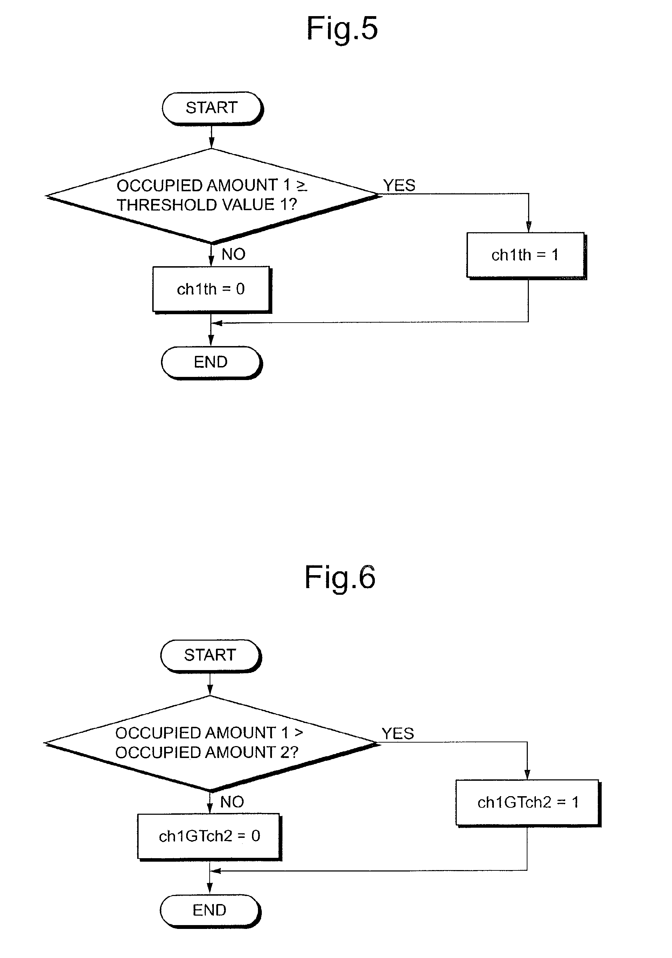

Fig. 4 is a flow diagram of operations for increasing and decreasing an occupied amount of buffer in the occupied amount of buffer calculation device shown in Fig. 3. In addition, Fig. 5 is a flow diagram of operations for judging an occupied amount of buffer in the occupied amount of buffer calculation device shown in Fig. 3.

As shown in Figs. 4 and 5, the occupied amount of buffer calculation device is constituted by, for example, an up-down counter. The up-down counter counts +1 when only an input operation takes place and counts -1 when only an output operation takes place. This value is an occupied amount of buffer. Further, as shown in Fig. 5, in comparing a threshold value and an occupied amount, the occupied amount of buffer calculation device compares an occupied amount of buffer and a threshold value set in advance. The occupied amount of buffer calculation device outputs 1 if the occupied amount of buffer is larger, and outputs 0 if the occupied amount of buffer is smaller. This threshold value set in advance can be realized by, for example, referring to a value of a resistor.

Fig. 6 is a flow diagram of operations for comparing an occupied amount of buffer in an occupied amount of buffer comparison device shown in Fig. 3. As shown in Fig. 6, this occupied amount of buffer comparison device represents a case in which only two occupied amounts of buffer are compared and a result of the comparison is outputted. However, actually, the same flow chart exists in all combinations of occupied amounts of buffer. Here, for example, if the same value is inputted, the occupied amount of buffer comparison device determines that an occupied amount with a higher priority is larger and outputs the data. In this example, the occupied amount of buffer comparison device determines that the second occupied amount has a higher priority.

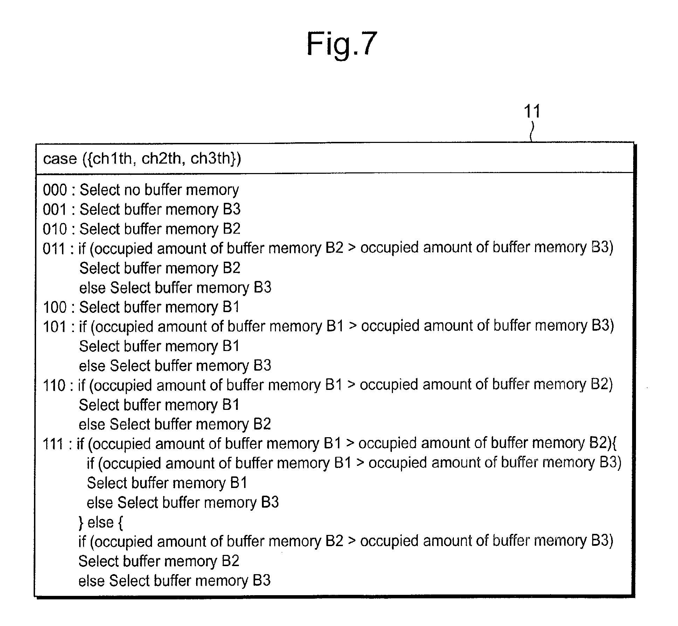

Fig. 7 shows a program for explaining operations for selecting a buffer of a buffer selection unit provided inside a data selection device shown in Fig. 3. As shown in Fig. 7, in this data selection device, for example, operation procedures of a buffer selection unit provided inside it are written as a program 11, and a buffer memory having a largest occupied amount is selected out of buffer memories selected according to a selection signal of each buffer memory.

In this example, a case in which the number of channels is three and threshold values (chlth to ch3th) are set is shown. For example, in the operation of the occupied amount of buffer calculation device of Fig. 5, when a result of calculation of the occupied amount of buffer calculation device is 000, this represents that no buffer memory is selected. When a result of calculation is 100, this represents that the buffer memory B1 is selected.

Next, specific operations of the embodiment will be described with reference to Figs. 3 to 7.

First, it is defined that the number of channels of digital data to be inputted is three, an output rate is 300 bytes/S, a packet size is 100 bytes, and a threshold value for each channel is 100 bytes.

In order not to allow each buffer memory in such a digital data multiplexing apparatus to overflow, a sum of input rates of inputted digital data is required to be equal to or lower than an output rate of multiplexed data. If some input rate is equal to or higher than the output rate, since a buffer memory is limited, it is obvious that the buffer memory overflows sooner or later. A ratio of an input rate of each digital data may be any ratio as long as a sum of the input rates is equal to or lower than the output rate.

Next, a threshold value of each input will be considered. In order to reduce the number of buffer memories, the threshold value is preferably small. This is because a buffer memory is not selected unless an occupied amount of buffer exceeds the threshold value. In addition, if data is outputted by a unit of packet, it is necessary to set a smallest packet size. This is because, if a buffer memory smaller than the packet size is selected, it is possible that data output for one packet cannot be performed. Thus, as the threshold value of each buffer, the above-described packet size of 100 bytes is set.

This embodiment of the present invention will be hereinafter described with a case in which each input rate is identical and the input rate is 100 bytes/S as an example.

First, digital data is inputted in each buffer memory at the input rate of 100 bytes/S. Any buffer memory is not selected until an occupied amount of each buffer memory exceeds a threshold value of 100 bytes. One second after starting the input, the occupied amount of each buffer memory reaches 100 bytes. As a result, a selection signal becomes active for each channel simultaneously and outputted from each of the occupied amount calculation devices O1 to On. In addition, an occupied amount of buffer of the same 100 bytes is outputted for each channel. This state is assumed to be a state S1.

At this point, in the data selection device 6, since selection signals of all the buffers are active, an output buffer is selected from a result of comparison outputted from the occupied amount of buffer comparison device 9. However, in such a case in which an occupied amount is the same value for each channel, the A3 channel is selected and outputted in accordance with a priority.

A state in which this C channel is completed to be outputted for one packet one second later is assumed to be a state S2. At this point, when an occupied size of each input buffer is compared, the A1 channel and the A2 channel have occupied amounts for approximately 1.3 packets, and the A3 channel has an occupied amount for approximately 0.3 packet. What is selected next is the A1 channel or the A2 channel having exceeded the threshold value whichever has a larger occupied amount. Since input rates are the same and occupied amounts are also the same, the A2 channel having a higher priority is selected. Subsequently, a state in which this A2 channel is completed to be outputted is assumed to be a state S3. At this point, when an occupied size of each input buffer memory is compared, the A1 channel has an occupied amount for approximately 1.7 packets, and the A2 channel and the A3 channel have occupied amounts for approximately 0.7 packet. Thereafter, what is selected next is the A1 channel that has exceeded the threshold value. A state after this A1 channel is outputted is the same as the state S1. These operations are repeated thereafter. Amaximum buffer memory necessary at this point is approximately 1.7 packets for the A1 channel.

Next, a worst case will be considered here as in the aforementioned conventional example. It is easily anticipated that a larger amount of data can be stored (occupied) in a buffer memory when an input rate is higher. Thus, a worst case of the A1 channel is a case in which an input rate of the A1 channel is the highest. This input rate of the A1 channel is assumed to be 99 bytes/S that is a value close to 100 bytes/S. In addition, an input rate of the A2 channel is assumed to be 0.9 byte/S and an input rate of the A3 channel is assumed to be 0.1 byte/S. A sum of these input rates is 100 bytes/S.

Further, even if each input rate is not equal, the aforementioned state S1 is an initial state of a worst case. This is because this state is a state with a largest occupied amount of buffer memory among the states before starting output of multiplexed data. This state occurs by staggering the start of input of each data in the order of the A3 channel, the A2 channel and the A1 channel.

If the start of input of each channel of A1, A2 and A3 is slightly staggered with respect to this state S1, various states can happen such as a state in which the A1 channel has exceeded the threshold value and the A2 and A3 channels are immediately before exceeding the threshold value, a state in which the A1 and A2 channels have exceeded the threshold value and the A3 channel is immediately be fore exceeding the threshold value.

Combinations of states at an instance when a channel exceeds the threshold value and immediately before a channel exceeds the threshold value are close to the state S1 that is the initial state of the worst case without limit. The worst case of the A1 channel is the state S1 because there is a priority precisely. However, when a case in which an input rate of each channel is replaced is taken into account, the worst case starts from a state in which the A1 channel is immediately before exceeding the threshold value and the A2 and A3 channels have exceeded the threshold value. This state is assumed to be a state S10. In this state, since the A2 and A3 channels have exceeded the threshold value, occupied amounts of both the channels are compared. As a result of the comparison, since the occupied amount of both the channels are the same at 100, the A3 channel having a higher priority is selected. At this point, the same channel is selected even if the A2 channel is immediately before exceeding the threshold value.

A state in which this A3 channel is completed to be outputted for one packet one second after is assumed to be a state S11. At this point, when an occupied size of each input buffer memory is compared, the A1 channel has an occupied amount for 1.99 packets, the A2 channel has an occupied amount for 1.009 packets, and the A3 channel has an occupied amount for 0.001 packet.

What is selected next in this state is the A1 channel having a larger occupied amount among the A1 channel and the A2 channel that have exceeded the threshold value. This state in which the A1 channel is completed to be outputted for one packet is assumed to be a state S12. As an occupied amount of each buffer memory at this point, the A1 channel has an occupied amount for 1.98 packets, the A2 channel has an occupied amount for 1.018 packets, and the A3 channel has an occupied amount for 0.002 packet. Here, the A1 channel hardly decreases because an input rate of the A1 channel is close to its output rate. That is, since the output rate is 100 bytes/S and the input rate is 99 bytes/S, even when the A1 channel is selected, the occupied amount decreases only one byte in one second. What is selected next is the A1 channel. This state in which the A1 channel is selected continues for a period during which the occupied amount of the A1 channel is more than that of the A2 channel.

An occupied amount of each buffer memory at the time when the occupied amount of the A2 channel has exceeded the occupied amount of the A1 channel is as described below. When the occupied amount of the A1 channel decreases one byte in one second, the occupied amount of the A2 channel increases by 0.9 byte. Thus, a condition of 1.9 - 0.01 x n < 1.018 + 0.009 x n is satisfied when n is 51, that is, 51 seconds after the state S12.

At this point, the A1 channel has an occupied amount for 1.47 packets, the A2 channel has an occupied amount for 1.477 packets, and the A3 channel has an occupied amount for 0.053 packet. This state is assumed to be a state S13. What is selected next is the A2 channel. One second later, in a state in which the A2 channel is completed to be outputted for one packet, a value necessary for a buffer memory of the A1 channel is maximum. Then, the A1 channel has an occupied amount for 2.46 packets, the A2 channel has an occupied amount for 0.486 packet, the A3 channel has an occupied amount for 0.054 packet. After this state, the A1 channel continues to be selected until the occupied amount of the A1 channel becomes smaller than those of the other channels. In addition, in the state S13, an occupied amount of the A1 channel is for 2.46 packets . When an input rate of the A1 channel is brought close to 100 bytes/S, which is its output rate, without limit, the occupied amount approaches 2.5 packets.

The occupied amount of 2.5 packets is the peak amount. This can be proved by the following theory:
(1) A maximum value of an occupied amount at the time when any of the buffer memories is not selected is an occupied amount for one packet, which is the threshold value, for each buffer memory. When the occupied amount exceeds the threshold value, any of the buffer memories is selected.
(2) In a state in which the buffer memories of the channels other than the A1 channel having a highest input rate is selected from the above-described state and the A1 channel is kept waited, the occupied amount comes to have a maximum value at the time when A1 channel is not selected, and the input rate becomes that for two packets that is close to the output rate without limit. The smaller the input rate at this point is than the output rate, the smaller the occupied amount becomes. The occupied amount does not have the maximum value any more.
(3) In order to have the channels other than the A1 channel to be selected from the above-described state of (2), the other channels are required to have occupied amounts larger than that of the A1 channel. However, since a sum of input rates is equal to or lower than the output rate, the occupied amounts of the other channels increase by a decreased portion of the occupied amount of the A1 channel. That is, since the occupied amount of the A1 channel decreases from that for two packets and the occupied amount of any of the other channel increases from that for one packet, a maximum value is 1.5 packets in the case in which any of the channels other than the A1 channel.
(4) A buffer memory necessary for the A1 channel has a maximum capacity in a state in which the channel is kept waited for one packet from the above-described state of (3), which can be calculated as 1.5 + 1 = 2.5. That is, it is sufficient for the A1 channel to have an occupied amount for 2.5 packets.

Moreover, when a buffer memory capacity necessary for the A2 channel and the A3 channel is taken into account, an occupied amount of the A2 channel has a maximum value when an input rate of the A2 channel is the highest. If the maximum value is found in the same manner as in the A1 channel, the maximum value of the occupied amount is 2.5 packets. In addition, the same is true for the A3 channel.

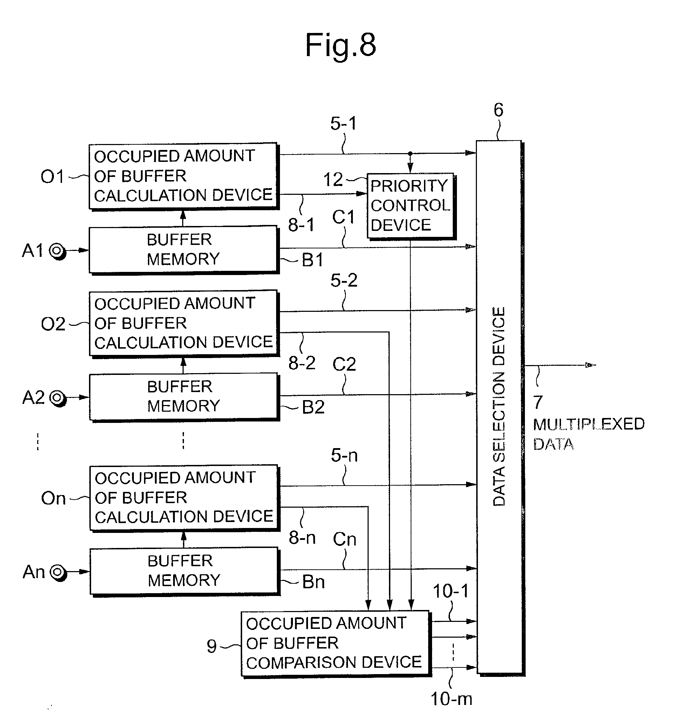

Other embodiments of the present invention will be hereinafter described with reference to Figs. 8 to 12.

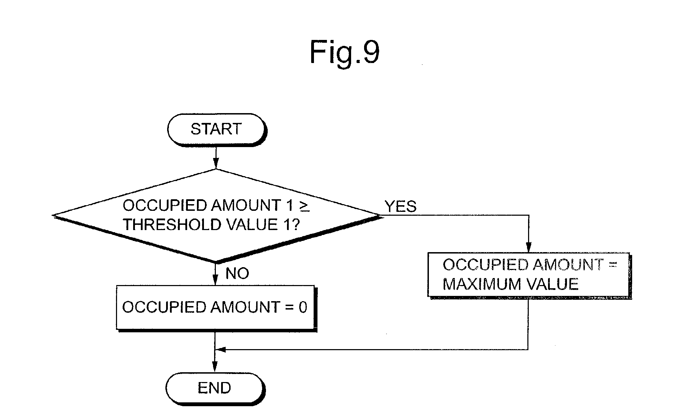

Fig. 8 is a block diagram of a digital data multiplexing apparatus for explaining a second embodiment of the present invention. Fig. 9 is a flow diagram of operations for controlling a priority of a buffer in a priority control device shown in Fig. 8. As shown in Fig. 8, in this embodiment, a priority control device 12 is additionally provided between the occupied amount of buffer calculation device O1 and the occupied amount of buffer comparison device 9 of the first embodiment. In addition, as shown in Fig. 9, this priority control device 12 is provided with a function for, if an actual occupied amount of data of the buffer memory B1 has exceeded a threshold value, changing an occupied amount of buffer to a maximum value and outputting the data.

That is, the digital data multiplexing apparatus of the second embodiment of the present invention is capable of outputting data of a channel most preferentially if an occupied amount of the channel has exceeded the threshold value even if the occupied amount is smaller than those of other channels. In particular, the digital data multiplexing apparatus displays effects when it is desired to give a high priority to, for example, system data. Here, although the digital data multiplexing apparatus corresponds to one buffer memory B1, it is also possible to provide a plurality of buffer memories.

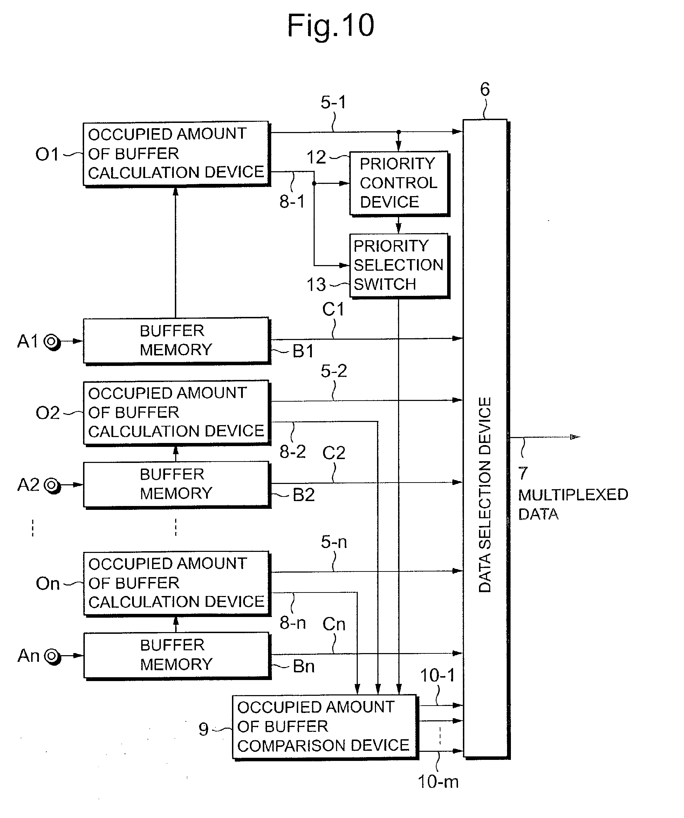

Fig. 10 is a block diagram of a digital data multiplexing apparatus for explaining a third embodiment of the present invention. As shown in Fig. 10, in this embodiment, a priority selection switch 13 is additionally provided between the priority control device 12 and the occupied amount of buffer comparison device 9 of the second embodiment. This priority selection switch 13 is characterized by switching an occupied amount of buffer 8-1 outputted from the occupied amount of buffer calculation device O1 and an occupied amount of buffer outputted from the priority control device 12 according to a value of a resistor to output the data to the occupied amount of buffer comparison device 9. That is, in this case, the digital data multiplexing apparatus of the third embodiment of the present invention makes it possible to select whether a priority is raised or usual control is performed according to a type of digital data A1 to An to be inputted.

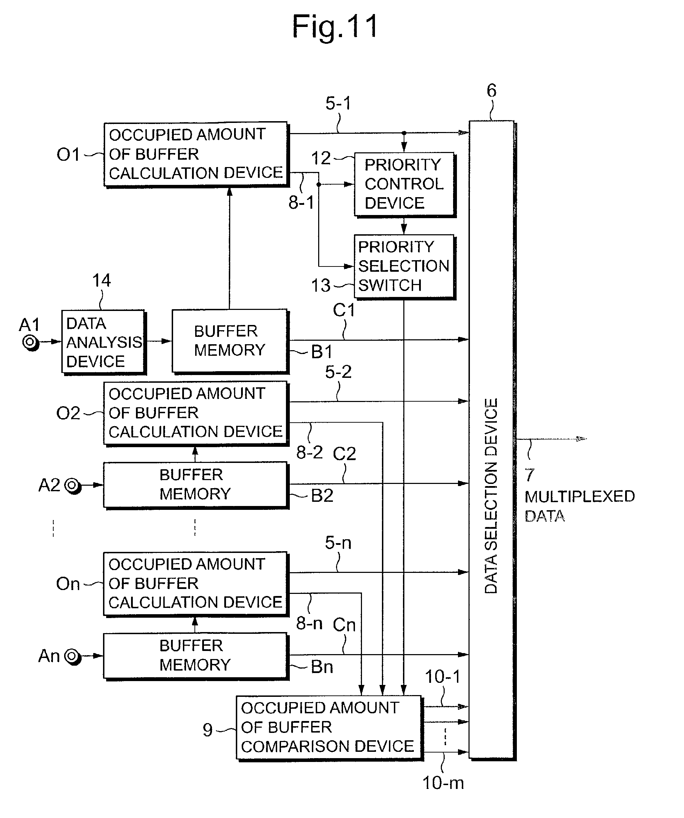

Fig. 11 is a block diagram of a digital data multiplexing apparatus for explaining a fourth embodiment of the present invention. As shown in Fig. 11, in this embodiment, a data analysis device 14 is additionally provided in a pre-stage of the buffer memories B1 to Bn of the third embodiment. For example, when an input is a transport stream, this data analysis device 14 analyzes header information and, if the input is system data, controls the priority selection switch 13 according to the selection signal 12 for raising a priority.

A digital data multiplexing apparatus of the fourth embodiment of the present invention makes it possible to automatically raise a priority if data is inputted of which a priority is required to be raised.

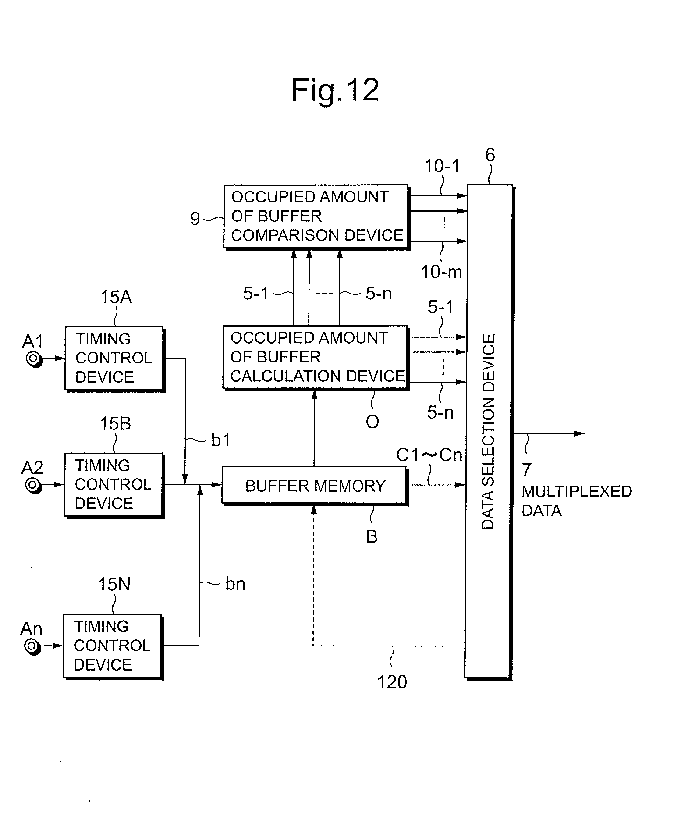

Fig. 12 is a block diagram of a digital data multiplexing apparatus for explaining a fifth embodiment of the present invention. As shown in Fig. 12, in this embodiment, timing control devices 15A to 15N are additionally provided between the input digital data A1 to An and the buffer memory B of the first embodiment, one buffer memory B is shared by channels as a buffer memory necessary for the channels. In these timing control devices 15A to 15N, output timing b1 to bn of data is adjusted in order to use the buffer memory B in a time division manner. For example, if an input is three channels, it is sufficient that the buffer memory operates at a clock three times as fast, and outputs data at first timing in the timing control device 15A for A1, at second timing in the timing control device 15B for A2 and at third timing in the timing control device 15N for A3 and repeatedly outputs the data in this way. Further, in this case, since the buffer memory B is shared and used in a time division manner, it is sufficient for the data selection device 6 to sequentially apply control indicated by dotted lines 120 to the buffer memory B.

That is, pointer management of the buffer memory B can be realized by changing a start address of each buffer memory. A size of a buffer memory necessary for one input is 2.5 packets. Therefore, for example, in a case in which one packet is 100 bytes, although a start address of A1 is 0, it is sufficient that a start address of A2 is 250 and a start address of A3 is 500.

Consequently, it becomes possible to reduce the number of buffer memories from n to one, and the number of address decoders having a large chip area in the buffer memories can also be reduced from n to one.

As described above, the digital data multiplexing apparatus of the present invention has an effect that a buffer memory capacity can be reduced by multiplexing to output data having a large occupied amount in a buffer memory.

In addition, since a maximum value of a buffer memory necessary for each input channel does not change even if the number of input channels increases, the digital data multiplexing apparatus of the present invention has an effect in that the more the number of input channels increases, the more a sum of capacities necessary for a buffer memory can be reduced than in the past.

## Claims

1. A digital data multiplexing apparatus for multiplexing a plurality of kinds of digital data, comprising:
a plurality of temporary memory means for temporarily storing said digital data individually;
a plurality of calculation means for calculating occupied amounts of digital data of said plurality of temporary memory means, respectively;
comparison means for comparing a result of calculation in said plurality of calculation means with a threshold value of an occupied amount for respective temporary memory means; and
data selection means for selecting an output from said plurality of temporary memory means and multiplexing it by a unit of packet according to a result of the comparison in said comparison means.

2. Apparatus according to claim 1, and arranged such that when an occupied amount of data of one temporary memory means among said plurality of temporary memory means exceeds said threshold value, said data selection means selects digital data stored in the pertinent temporary memory means and, when occupied amounts of data of said plurality of temporary memory means exceed said threshold value, said data selection means selects digital data stored in a temporary memory means having a largest occupied amount among said plurality of temporary memory means.

3. Apparatus for multiplexing a plurality of kinds of digital data according to claim 1,
wherein said plurality of temporary memory means use a buffer memory, respectively, and said plurality of data calculation means use an occupied amount of buffer calculation device, respectively.

4. Apparatus according to claim 1,
wherein said plurality of calculation means use an occupied amount of buffer calculation device, respectively.

5. A digital data multiplexing apparatus for multiplexing a plurality of kinds of digital data, comprising:
a plurality of temporary memory means for temporarily storing said digital data individually;
a plurality of data calculation means for calculating occupied amounts of digital data of said plurality of temporary memory means, respectively;
a priority control device connected to at least one of said plurality of data calculation means and arranged to change priority of a pertinent temporary memory means among said plurality of temporary memory means;
comparison means for comparing an output from said priority control device and outputs from at least one of said data calculation means not connected to said priority control device with a threshold value of an occupied amount for respective temporary memory means; and
data selection means for selecting an output from said plurality of temporary memory means according to a result of the comparison and to multiplex the output by a unit of packet.

6. Apparatus according to claim 5, and arranged such that when an occupied amount of data in said plurality of temporary memory means exceeds the threshold value, said priority control device outputs a maximum value of a data capacity to said occupied amount comparison means separately from an actual occupied amount, thereby raising a priority of selection of the output to the said comparison means.

7. A digital data multiplexing apparatus for multiplexing a plurality of kinds of digital data, comprising:
a plurality of temporary memory means for temporarily storing said digital data individually;
a plurality of data calculation means for calculating occupied amounts of digital data of said plurality of temporary memory means, respectively;
a priority control device connected to at least one of said plurality of data calculation means and arranged to change priority of a pertinent temporary memory means among said plurality of temporary memory means;
a priority selection switch connected to at least one of said plurality of data calculation means and said priority control device and arranged to switch an occupied amount of digital data of said temporary memory means output from said data calculation means and an occupied amount of digital data output from said priority control device;
comparison means for comparing an output from said priority control device and outputs from at least one of occupied amount of data calculation means not connected to said priority control device with a threshold value of an occupied amount set for respective temporary memory means in advance; and
data selection means for selecting an output from said plurality of temporary memory means according to a result of the comparison and to multiplex the output by a unit of packet.

8. Apparatus according to claim 7,
wherein at least one of a plurality of temporary memory means for temporarily storing said digital data individually connects to a pre-stage of a data analysis device for analyzing said digital data to be input and controls said priority selection switch according to a result of the analysis to automatically raise a priority.

9. A digital data multiplexing apparatus for multiplexing a plurality of kinds of digital data, comprising:
a plurality of timing control devices for controlling timing for inputting and outputting said digital data individually;
temporary memory means for inputting and temporarily storing outputs from said plurality of timing control devices;
calculation means for calculating an occupied amount of digital data of said temporary memory means for respective timings and generating a multiplex control signal corresponding to said plurality of kinds of digital data;
comparison means connected to said occupied amount of data calculation means and arranged to compare said multiplex control signal with a threshold value of an occupied amount of data for respective timing control devices; and
data selection means for selecting an output from said temporary memory means according to said multiplex control signal output from said calculation means and according to a result of the said comparison, and multiplexing the output by a unit of packet.

10. Apparatus according to claim 9, wherein said plurality of timing control devices are arranged to utilize said temporary memory means by staggered timing.
